# EUROPEAN PATENT APPLICATION

(11) **EP 2 357 572 A1**
(43) Date of publication of application: **17.08.2011**
(21) Application number: 09825772.8
(22) Date of filing: 13.11.2009
(51) Int. Cl.: G06F 17/30

(54) **PROCESSING METHOD AND APPARATUS OF PAGE RESOURCES**

(30) Priority: 14.11.2008 CN 200810226380
(71) Applicant: Beijing Sogou Technology Development Co., Ltd., Beijing 100084 (CN)
(72) Inventor: WAN, Yong, Beijing 100084 (CN)
(74) Representative: Detken, Andreas
(86) International application number: PCT/CN2009/074931
(87) International publication number: WO 2010/054597

(57) **Abstract**

A processing method of page resources is provided. The method comprises: identifying specific resources related to web pages, and determining corresponding relations between the identified specific resources and the web pages (S101); according to the corresponding relations between the specific resources and the web pages, displaying prompt indicia indicating the web pages having the specific resources (S 102). A processing apparatus of page resources is still disclosed.

## Description

This application claims the priority of Chinese Patent Application No. 200810226380.5, filed on November 14, 2008, in the Chinese Patent Office, entitled "Page Resource Processing Method And Apparatus," the entire contents of which are incorporated herein by reference.

### Field of the Invention

The present invention relates to the field of browser technology and, more particularly, relates to a page resource processing method and apparatus.

### Background of the Invention

With the development of multimedia technologies, people can view a rich variety of information resources on the Internet through browsers. These resources usually include text, video, audio, pictures and other types of resources. These different types of resources bring a variety of visual or audio experience to people, enriching people's spiritual lives.

In general, a web page can provide a large amount of information. However, web page-related resources may exist in many different forms, and some web page-related resources often cannot be fully explored and utilized. Thus, the utilization rate of the web page-related resources cannot be guaranteed, and the value of web page-related resources cannot be truly realized. For example, some audio resources are used as the web page background music, and the web page does not have a corresponding player. Thus, a user can only learn the presence of the resources by listening. That is, if the user does not open any audio device, the user cannot be aware of the existence of the audio resources in the web page, and the audio resources thus cannot be utilized, etc.

### Summary of the Invention

The present invention provides a page resource processing method and apparatus to fully explore and utilize web page-related resources.

To achieve this objective, the present invention provides the following aspects:

A page resource processing method, comprising:
identifying a specific resource related to a web page, and determining a corresponding relationship between the specific resource and the web page;
displaying a prompt indicating the specific resource in the web page based on the corresponding relationship between the specific resource and the web page.

Preferably, identifying the specific resource related to the web page further includes:
identifying the specific resource contained in the web page;
   and/or,
identifying the specific resource contained in a sub-page of the web page;
   and/or,
identifying the specific resource backend-transferred in the web page;
   and/or,
identifying the specific resource contained in another web page pointed to by a hyperlink in the web page;
   and/or,
identifying the specific resource contained in a web page having a same theme as the web page.

Preferably, the specific resource includes any one or more of a video resource, an audio resource, an image resource, a text resource, and an animation resource.

Preferably, identifying the specific resource related to the web page further includes:
intercepting a request message for downloading the specific resource related to the web page, the request message including uniform resource locator information of the specific resource;
identifying the specific resource related to the web page based on the uniform resource locator information of the specific resource in the request message.

Preferably, the specific resource does not need to be played by a player embedded in the web page, and identifying the specific resource related to the web page and determining the corresponding relationship between the specific resource and the web page further include:
intercepting a request message for downloading the specific resource related to the web page sent to a server from a browser, the request message including uniform resource locator information of the web page and the uniform resource locator information of the specific resource;
identifying the specific resource related to the web page based on the uniform resource locator information of the specific resource, and determining the corresponding relationship between the specific resource and the web page based on the uniform resource locator information of the web page.

Preferably, the specific resource needs to be played by a player embedded in the web page, and identifying the specific resource related to the web page and determining the corresponding relationship between the specific resource and the web page further include:
intercepting a first request message for downloading the player sent to a server from a browser, the first request message including uniform resource locator information of the web page and the uniform resource locator information of the player;
determining a corresponding relationship between the web page and the player based on the uniform resource locator information of the web page in the first request message;
after the player is downloaded, intercepting a second request message for downloading the specific resource sent to the server from the player, the second request message including uniform resource locator information of the specific resource and the uniform resource locator information of the player;
identifying the specific resource related to the web page based on the uniform resource locator information of the specific resource in the second request message, and determining the corresponding relationship between the specific resource and the player based on the uniform resource locator information of the player in the second request message;
determining the corresponding relationship between the identified specific resource and the web page based on the corresponding relationship between the web page and the player and the corresponding relationship between the player and the specific resource.

Preferably, identifying the specific resource related to the web page further includes:
identifying the specific resource related to the web page based on a data portion of a response message from a server in reply to a request message for downloading the specific resource related to the web page.

Preferably, the specific resource does not need to be played by a player embedded in the web page, and identifying the specific resource related to the web page and determining the corresponding relationship between the specific resource and the web page further includes:
intercepting a request message for downloading the specific resource related to the web page sent to the server from a browser and the response message returned from the server, the request message including uniform resource locator information of the web page and the uniform resource locator information of the specific resource;
identifying the specific resource related to the web page based on the data portion of the response message;
determining the request message based on the response message, and determining the corresponding relationship between the specific resource and the web page based on the uniform resource locator information of the web page in the request message.

Preferably, the specific resource needs to be played by a player embedded in the web page, and identifying the specific resource related to the web page and determining the corresponding relationship between the specific resource and the web page further includes:
intercepting a third request message for downloading the player sent to the server from a browser, the third request message including uniform resource locator information of the web page and the uniform resource locator information of the player;
determining a corresponding relationship between the web page and the player based on the uniform resource locator information of the web page in the third request message;
after the player is downloaded, intercepting a fourth request message for downloading the specific resource sent to the server from the player and a response message returned from the server, the fourth request message including uniform resource locator information of the specific resource and the uniform resource locator information of the player;
identifying the specific resource related to the web page based on a data portion of the response message;
determining the request message based on the response message, and determining the corresponding relationship between the specific resource and the player based on the uniform resource locator information of the player in the fourth request message;
determining the corresponding relationship between the identified specific resource and the web page based on the corresponding relationship between the web page and the player and the corresponding relationship between the player and the specific resource.

Preferably, the specific resource that does not need to be played by the player embedded in the web page includes any one or more of an image, a text, an animation and a web page background music.

Preferably, the specific resource that needs to be played by the player embedded in the web page includes a video resource and/or an audio resource capable of being played in the player embedded in the web page.

Preferably, displaying the prompt indicating the specific resource in the web page further includes: displaying the prompt indicating the specific resource contained in the web page on an address bar, and/or, tab bar, and/or, toolbar, and/or sidebar of a browsing tool and/or on an area where the specific resource is located.

Preferably, displaying the prompt indicating the specific resource in the web page further includes:
displaying the prompt indicating the specific resource contained in the web page in the a window of the web page containing the specific resource;
   or,
when at least two web pages containing identified specific resources, displaying a unified prompt indicating the specific resources contained in each of the at least two web pages; or,
when at least two specific resources are identified in the web page, displaying a unified prompt indicating the at least two specific resources contained in the web page.

Preferably,
identifying the specific resource related to the web page further includes: identifying a type of the specific resource;
and contents of the prompt include: the type of the specific resource;
and/or,
identifying the specific resource related to the web page further includes: identifying a name of the specific resource;
and the contents of the prompt include: the name of the specific resource;
and/or,
identifying the specific resource related to the web page further includes: identifying a download address of the specific resource;
and the contents of the prompt include: the download address of the specific resource.

A page resource processing apparatus, comprising:
an identification unit used to identify a specific resource related to a web page, and to determine a corresponding relationship between the specific resource and the web page;
a prompt unit, used to display a prompt indicating the specific resource in the web page based on the corresponding relationship between the specific resource and the web page.

Preferably, the identification unit further includes:
a first identification sub-unit used to identify the specific resource contained in the web page;
   and/or,
a second identification sub-unit used to identify the specific resource contained in a sub-page of the web page;
   and/or,
a third identification sub-unit used to identify the specific resource backend-transferred in the web page;
   and/or,
a fourth identification sub-unit used to identify the specific resource contained in another web page pointed to by a hyperlink in the web page;
   and/or,
a fifth identification sub-unit, used to identify the specific resource contained in another web page having a same theme as the web page.

Preferably, the specific resource includes any one or more of a video resource, an audio resource, an image resource, a text resource, and an animation resource.

Preferably, the identification unit is further used to intercept a request message for downloading the specific resource related to the web page, to identify the specific resource related to the web page based on uniform resource locator information of the specific resource in the request message, and to determine the corresponding relationship between the specific resource and the web page.

Preferably, the specific resource does not need to be played by a player embedded in the web page, and the identification unit further includes:
a first intercept sub-unit used to intercept a request message for downloading the specific resource related to the web page sent to a server from a browser, the request message including uniform resource locator information of the web page and the uniform resource locator information of the specific resource;
a first identification sub-unit, used to identify the specific resource related to the web page based on the uniform resource locator information of the specific resource, and to determine the corresponding relationship between the specific resource and the web page based on the uniform resource locator information of the web page.

Preferably, the specific resource needs to be played by a player embedded in the web page, and the identification unit further includes:
a second intercept sub-unit used to intercept a first request message for downloading the player sent to a server from a browser, the first request message including uniform resource locator information of the web page and the uniform resource locator information of the player;
a first relationship determine sub-unit used to determine a corresponding relationship between the web page and the player based on the uniform resource locator information of the web page in the first request message;
a third intercept sub-unit used to, after the player is downloaded, intercept a second request message for downloading the specific resource sent to the server from the player, the second request message including uniform resource locator information of the specific resource and the uniform resource locator information of the player;
a second identification sub-unit used to identify the specific resource related to the web page based on the uniform resource locator information of the specific resource in the second request message;
a second relationship determine sub-unit used to determine the corresponding relationship between the specific resource and the player based on the uniform resource locator information of the player in the second request message;
a third relationship determine sub-unit used to determine the corresponding relationship between the identified specific resource and the web page based on the corresponding relationship between the web page and the player and the corresponding relationship between the player and the specific resource.

Preferably, the identification unit is further used to identify the specific resource related to the web page based on a data portion of a response message from a server in reply to a request message for downloading the specific resource related to the web page, and to determine the corresponding relationship between the specific resource and the web page.

Preferably, the specific resource does not need to be played by a player embedded in the web page, and the identification unit further includes:
a fourth intercept sub-unit used to intercept a request message for downloading the specific resource related to the web page sent to the server from a browser and the response message returned from the server, the request message including uniform resource locator information of the web page and the uniform resource locator information of the specific resource;
a third identification sub-unit used to identify the specific resource related to the web page based on the data portion of the response message;
a fourth relationship determine sub-unit used to determine the request message based on the response message, and to determine the corresponding relationship between the specific resource and the web page based on the uniform resource locator information of the web page in the request message.

Preferably, the specific resource needs to be played by a player embedded in the web page, and the identification unit further includes:
a fifth intercept sub-unit used to intercept a third request message for downloading the player sent to the server from a browser, the third request message including uniform resource locator information of the web page and the uniform resource locator information of the player;
a fifth relationship determine sub-unit used to determine a corresponding relationship between the web page and the player based on the uniform resource locator information of the web page in the third request message;
a sixth intercept sub-unit used to, after the player is downloaded, intercept a fourth request message for downloading the specific resource sent to the server from the player and a response message returned from the server, the fourth request message including uniform resource locator information of the specific resource and the uniform resource locator information of the player;
a fourth identification sub-unit, used to identify the specific resource related to the web page based on a data portion of the response message;
a sixth relationship determine sub-unit used to determine the request message based on the response message, and to determine the corresponding relationship between the specific resource and the web page based on the uniform resource locator information of the web page in the fourth request message;
a seventh relationship determine sub-unit, used to determine a corresponding relationship between the identified specific resource and the web page based on the corresponding relationship between the web page and the player and the corresponding relationship between the player and the specific resource.

Preferably, the specific resource that does not need to be played by a player embedded in the web page includes any one or more of an image, a text, an animation and a web-page background music.

Preferably, the specific resource that needs to be played by a player embedded in the web page includes a video resource and/or an audio resource capable of being played in the player embedded in the web page.

Preferably, the prompt unit is further used to display the prompt indicating the specific resource contained in the web page on an address bar, and/or, tab bar, and/or, toolbar, and/or sidebar of a browsing tool and/or on an area where the specific resource is located.

Preferably, the prompt unit further includes:
a first prompt sub-unit used to display the prompt indicating the specific resource contained in the web page in the a window of the web page containing the specific resource;
   or,
a second prompt sub-unit used to, when at least two web pages containing identified specific resources, display a unified prompt indicating the specific resources contained in each of the at least two web pages;
   or,
a third prompt sub-unit used to, when at least two specific resources are identified in the web page, display a unified prompt indicating the at least two specific resources contained in the web page.

Preferably, the identification unit further includes:
a type identification sub-unit used to identify a type of the specific resource, wherein contents of the prompt include: the type of the specific resource;
   and/or,
a name identification sub-unit used to identify a name of the specific resource, wherein the contents of the prompt include: the name of the specific resource;
   and/or,
a download-address identification sub-unit used to identify a download address of the specific resource, wherein the contents of the prompt include: the download address of the specific resource.

Preferably, the apparatus is a browser.

A computer-readable medium including computer program instructions, when the computer program instructions being executed by a computer unit, instructing the computer unit to:
identify a specific resource related to a web page, and determine a corresponding relationship between the specific resource and the web page;
display a prompt indicating the specific resource in the web page based on the corresponding relationship between the specific resource and the web page.

According to the embodiments of the present invention, the present invention discloses the following technical effects:
The present invention, by identifying a specific resource related to a web page and determining a corresponding relationship between the identified specific resource and the web page; then displaying a prompt indicating the specific resource contained in the web page based on the corresponding relationship between the specific resource and the web page, is able to prompt the specific resource provided by the web page to a user in an intuitive way, thus enabling the user to clearly find a variety of resources related to the web page to facilitate the resources related to the web page to be fully explored and utilized.

Secondly, because the prompt is given based on the corresponding relationship between the specific resource and the web page, a user can clearly tell what specific resources are on which web page, and the given prompt will not be mistaken due to switching of current web page. In addition, the prompt can be given on an address bar, tab bar, toolbar, and floating toolbar near the location of the specific resource, and the user can always get the appropriate prompting message. By prompting on the floating toolbar in the vicinity of the location of specific resources, the prompting message can appear more straightforward.

### Brief Description of the Drawings

Figure 1 is a flow chart of a method provided by the embodiments of the invention;
Figure 2 is an exemplary diagram of a first apparatus provided by the embodiments of the invention;
Figure 3 is an exemplary diagram of a second apparatus provided by the embodiments of the invention;
Figure 4 is an exemplary diagram of a third apparatus provided by the embodiments of the invention;
Figure 5 is an exemplary diagram of a fourth apparatus provided by the embodiments of the invention; and
Figure 6 is an exemplary diagram of a fifth apparatus provided by the embodiments of the invention.

### Detailed Description of the Invention

To better understand the above-mentioned objectives, features and advantages of the present invention, the followings further provide detailed illustrations of the present invention in combination with the drawings and detailed embodiments.

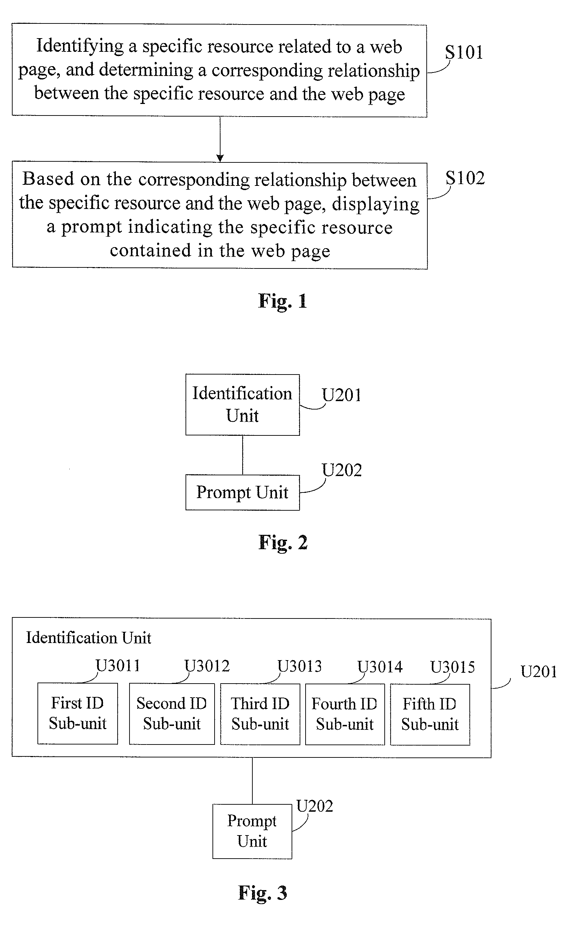

Referring to Figure 1, the present embodiment provides a page resource processing method including the following steps:
S101: identifying a specific resource related to a web page, and determining a corresponding relationship between the specific resource and the web page;
S102: based on the corresponding relationship between the specific resource and the web page, displaying a prompt indicating the specific resource contained in the web page.

The specific resource, as described in the present invention, includes any one or more of a video resource, an audio resource, an image resource, a text resource, and an animation resource (including GIF animations, flash animations, etc.). Further, the present invention can prompt specific resources published or posted in a variety of ways. For example, audio resources that can be prompted include web page background music, music played through a player embedded in the web page, and music hyperlinks contained in the web page, etc.

Further, the specific resource related to a web page may include any specific resource contained in the web page (such as a picture, a text resource, a background music, etc., in the current web page itself); any specific resource in a sub-page of the current web page (for example, some pages on the Mop main web page are sub-pages of the Mop main web page); any specific resources in web pages related to the current web page, and any specific resource backend-transferred in the web page (for example, the audio, video and other resources played by a player embedded in the web page are backend transferred in the web page), and so on. Further, a web page related to the current web page may include a web page pointed to by a hyperlink in the current web page, or have a same theme as the current web page (for example, in the BBS system, due to a large number of posts, several web pages may have the same theme).

In certain embodiments of the present invention, information during loading the web page may be intercepted or the front page elements of the web page may be analyzed so as to identify specific resources related to the web page, and to determine a corresponding relationship between the specific resources and the web page. For sub-pages of the web page, web pages pointed by the hyperlinks, and web pages with the same theme, these pages may be pre-loaded to identify the specific resources in these related web pages. Among them, for the specific resources in a web page pointed to by the hyperlink in the current web page, prompting may be performed in the current web page containing the hyperlink, such as prompting "This link contains a video resource," etc. For the specific resources in the web pages having the same theme as the current web page, prompts, such as "Next page contains pictures," may be displayed on the current web page, or prompts may be displayed directly on the picture attachment such as "Previous" and "Next," etc. Or image positioning techniques may be used together, when a user clicks on the "Next", the location of the next picture can be directly jumped to (including the situation when the next picture is on the next page.) The followings describe in detail how to identify those specific resources related to the web page, and how to determine the corresponding relationship between these specific resources and the web page.

Typically, the specific resources can be published or posted on the web page in different ways, but all need to first download these resources from the server, and then to post them on the web page. When downloading the resources, a request message for downloading the resources needs to be sent to the server. The request message may include uniform resource locator information of the resource requested to be downloaded and uniform resource locator information of the sender of the request message. In practical applications, the uniform resource locator information may be the Uniform Resource Identifier (URI). A URI can include the Uniform Resource Locator (URL), or the Uniform Resource Name (URN). To facilitate the description, the URL is used in all the embodiments of the present invention. When identifying the specific resource(s) or when determining the corresponding relationship between the specific resources and the web page, such request message may be used. However, for specific resources published or posted in different ways, the sender of the request message may be different. In practical applications, corresponding methods may be used to identify specific resources and to determine the corresponding relationship between the specific resources and the web page. For example:
(1) For a picture resource, a text resource, or an audio resource used as the background of the web page, a request message for downloading these resources is sent to the server by the browser. The request message includes the URL of the resource and the URL of the web page containing the resource. Therefore, by directly intercepting the request message to download the specific resource related to the web page and sent to the server by the browser, a suffix of the URL of the resource in the request message can be used to identify the type of the specific resource related to the web page. Further, the URL of the web page sending the request message in the request message can be used to determine the corresponding relationship between the specific resource and the web page, i.e., to determine which web page the specific resource is located in.
(2) For an audio resource or a video resource played by a player embedded in the web page, unlike the picture and text resource in the web page, the browser itself cannot play such resource. The request message for downloading this resource is sent by the player embedded in the web page. That is, first the browser downloads the player from the server based on the player's URL, and the player then downloads the audio or video based on the URL of the audio or video. Thus, the request message for downloading the audio or video sent from the player includes the URL of the resources and the URL of the player. At the same time, the player embedded in the web page is downloaded from the server by the browser. Thus, the following methods can be used to identify the specific resource related to the web page, and to determine the corresponding relationship between the specific resource and the web page:

First, the request message to request downloading the player sent to the server by the browser is intercepted, and the request message includes the URL of the web page and the URL of the player requested to be downloaded. The URL of the web page is used to determine the corresponding relationship between the player and the web page. Then, the request message to request downloading the specific resources sent to the server by the player is intercepted, and the suffix of the URL of the specific resource in the request message is used to identify the specific resource, and the URL of the player is used to determine the corresponding relationship between the player and the specific resource. Finally, based on the corresponding relationship between the web page and the player, and the corresponding relationship between the player and the specific resource, the corresponding relationship between the specific resource and the web page can be determined, i.e., which web page the specific resource is located in.

In the above-mentioned embodiments, the type of the specific resource is identified based on the request message sent to the server. For example, if it is found that a certain resource in the request message has a suffix of 'jpg', then the resource is identified as a picture resource. However, in some cases, this approach may not accurately obtain attribute information of the resources. For certain types of resources, when the browser sends the request message, the URL in the request message can have an arbitrary suffix, which will not affect the client side. For example, the suffix of a picture is usually 'jpg', but when the browser loads the picture resource, if the URL of the picture in the request message sent by the browser has the suffix of '123', the client side can still successfully load the picture resource. However, when using the request message sent by the browser to identify the resource type, it will not be able to identify the true type of the resource, i.e., will not be able to identify the resource is a picture type.

Therefore, in the preferred embodiments of the invention, the attribute information of the resource can be obtained by intercepting a response message from the server returned to the browser. Because the server, after receiving the request message from the browser, will return to the browser a response message, which also includes data contents in addition to a response header (i.e., the binary file stream of the file requested by the browser), the type of the file outputted by the server can be determined by analyzing data of certain locations in the data contents. For example, a gif image is characterized as: the first six bytes are 'GIF89a', an Flv format file is characterized as: the first three bytes are 'FLV'; and so on. Therefore, the type of the requested resource can be accurately identified based on the data portion of the response message returned from the server.

Similarly, when using the data portion of the response message to identify a resource related to the web page, because the senders of request messages can be different, for the resources published or posted in different ways, steps to determine the corresponding relationship between the resource and the web page may also be slightly different, as described below:
(1) For a picture resource, a text resource, or an audio resource used as the background of the web page, the request message for downloading the resource is sent to the server by the browser. Thus, the request message for downloading the resource related to the web page is sent to the server from the browser, and the response message returned from the server to the browser can be directly intercepted. Using the data portion of the response message to identify the specific resource related to the web page, and then the request message corresponding to the response message can be found. It can then be determined which web page sent out the request message (as the request message includes the URL of the requesting web page), and to determine the corresponding relationship between the specific resource and the web page.
   It should be noted that the formats of the above request message and response message are based on the hypertext transfer protocol (HTTP) protocol. According to the HTTP protocol, the request message includes the URL of the requesting web page, but the server returns the response message based on the number of each request message received. Thus, the response message returned from the server no longer includes the URL of the requesting web page, and the corresponding relationship between the web page and the specific resource cannot be obtained directly from the response message. However, based on the number, a request message corresponding to each response message can be found and, further based on the URL of the requesting web page in the request message, the corresponding relationship between the web page and the specific resource can be determined.
(2) For an audio resource or video resource played by a player embedded in the web page, the request message to request downloading the player sent to the server by the browser is first intercepted, and the request message includes the URL of the web page and the URL of the player requested to be downloaded. The URL of the web page is used to determine the corresponding relationship between the player and the web page. After the player is downloaded, the request message to request downloading the specific resource sent to the server by the player is intercepted, and the response message returned to the player from the server is also intercepted. The data portion of the response message returned to the player is used to identify the specific resource (including the resource type), and then the request message corresponding to the response message can be found. Because the request message includes the URL of the player and the URL of the specific resource to be downloaded, the corresponding relationship between the player and the specific resource can be determined based on the URL of the player in the request message. Finally, based on the corresponding relationship between the web page and the player, and the corresponding relationship between the player and the specific resource, the corresponding relationship between the specific resource and the web page can be determined.

As above mentioned, determining the corresponding relationship between the web page and the specific resource is done through intercepting information during loading of the web page to identify the specific resource related to the web page and to determine the corresponding relationship between the web page and the specific resource. In practical applications, identifying the specific resource related to the web page can also be done through analyzing the front page elements and other methods, and the corresponding relationship between the web page and the specific resource can also be determined.

For example, for a picture in the web page, the page elements of the web page can be first analyzed. If the page elements include a <html:img> tag, it is proven that the web page contains a picture element. At the same time, based on the coordinates or other attribute information of the element in the web page, the corresponding relationship between the picture and the web page hosting the picture can then be determined.

After the specific resource related to the web page is identified and the corresponding relationship between the specific resource and the web page is determined, a prompt indicating such specific resource contained in the web page can be displayed based on the corresponding relationship.

More particularly, the prompt indicating the specific resource contained in the current web page can be displayed in the same window in which the current web page having the specific resource is located. The prompt may be a prompt icon, or any other type of indicator. The prompt can be displayed at various locations of the window of the current web page, such as the browser's address bar, tab bar, tool bar, and floating toolbar page near the location of the specific resource on the web page. If the web page containing the specific resource is currently being displayed, the prompt can be shown in any one or more of the above-mentioned locations. However, if the web page containing the specific resource is minimized or another window is currently being displayed, causing the user can only see the tab bar corresponding to the web page containing the specific resource, the prompt indicating the specific resource in the web page can still be given on the tab bar. Further, in order to prompt on a floating toolbar near the location of the resource, the front page elements can be analyzed to obtain the coordinates of the location of the specific resource. When the mouse moves over the location of the specific resource, the corresponding floating toolbar can be displayed based on the corresponding coordinates.

Further, prompt icons may be used as the only prompt to indicate the type of resource. But in practical applications, more information can also be prompted when needed, such as the name of the prompted resource, and the title and lyrics of the background music, etc. On the other hand, in order to facilitate downloading by the user, the downloading address of the resource can also be provided, so that the user can easily download the resource needed. Among them, the resource name and downloading address can be obtained from the request message requesting downloading the resource sent to the server, and the lyrics of the background music can be obtained by searching the Internet using certain searching tools. To make the web page look clean and simple, the resource name, lyrics, and download address, etc., may be displayed on a drop-down list of the resource prompt icon. In this way, through the resource prompt icons located on the current web page, the user can easily know which specific resources the web page has, and, further, if the user is interested, the user can click on or move the mouse over the prompt icon, and then the prompt icon can use the drop-down list to show the user any one or more of resource name, lyrics, and download address, etc. Of course, the contents of the prompt icon can be directly seen from the prompt icon, or can be seen only when clicking on the prompt icon or moving the mouse over the prompt icon, such as the name, the download address, and other information. When the user clicks on the prompt or moves the mouse over the prompt, the contents are displayed to the user. In other words, not all contents of the prompt are directly displayed on the web page.

In addition, if a web page has two or more specific resources of the same type, such as multiple videos, only one prompt icon may be displayed on the current web page, and the respective information of the multiple videos can be displayed on the drop-down list of the video prompt icon.

If a web page contains two or more different types of specific resources, such as video and audio, two prompt icons may be displayed on the current web page, one is the audio prompt icon, and the other one is the video prompt icon.

Also, in addition to displaying a prompt icon with respect to each web page, information on the specific resources contained in various web pages can be put together and displayed with the prompt icon. For example, when the user opens more than two web pages, specific resources are identified in multiple web pages. At this time, not every web page provides a prompt icon at a specific location, instead, a single unified prompt icon is provided on a toolbar of the browsing tool (e.g., the browser). When the user moves the mouse over or clicks on the prompt icon, the prompt icon can use a drop-down list to show information on the specific resources in each web page (e.g., resource name, lyrics, download address, and other relevant information). Further, when the drop-down list is used to prompt, the title and the URL of the web page and other information can be used to uniquely identify the web page, and the type and name, etc., of the specific resources in each web page may be displayed at the same time.

Alternatively, when there are two or more specific resources in a web page, they can be unified together to give a single unified prompt icon. For example, five video resources are identified in a web page currently opened by the user, a prompt icon showing five videos in the web page can be displayed on a certain location of the web page or on a toolbar of the browser in the form of a drop-down list.

Those with ordinary skill in the art can understand that all or part of the above methods can be achieved by computer programs instructing corresponding hardware. The computer programs can be stored on a computer readable storage medium. The computer programs, when being executed, include the following steps: identifying a specific resource related to a web page, and determining the corresponding relationship between the specific resource and the web page; based on the corresponding relationship between to the specific resource and the web page, displaying a prompt indicating the specific resource contained in the web page. The described storage medium can be, for example, a ROM/RAM, disk, and CD-ROM, etc.

Corresponding to the page resource processing method provided in the embodiments of the present invention, a page resource processing apparatus is also provided by embodiments of the present invention. Referring to Figure 2, the apparatus includes:
Identification unit U201, which is used to identify the specific resource related to the web page and to determine the corresponding relationship between the specific resource and the web page;
Prompt unit U202, which is used to, based on the corresponding relationship between the specific resource and the web page, display the prompt indicating the specific resource contained in the web page.

The embodiments of the present invention not only can prompt the resource contained in the web page to the user, but also prompt the resources in a sub-page of the web page or other web pages related to the web page. Thus, referring to Figure 3, the identification unit U201 may include:

A first identification sub-unit U3011, which is used to identify the specific resource in the web page.

The identification unit U201 may also include a second identification sub-unit U3012, which is used to identify the specific resources in the sub-page of the current web page.

The identification unit U201 may also include a third identification sub-unit U3013, which is used to identify the specific resources backend-transferred in the current web page, mainly referring to the audio or video resources played by a player embedded in the current web page.

In addition, the identification unit U201 can also identify the specific resources contained in other web pages related to the current web page. Thus, the identification unit U201 can also include:
A fourth identification sub-unit U3014, which is used to identify specific resources contained in a web page pointed to by a hyperlink in the current web page;
A fifth identification sub-unit U3015, which is used to identify specific resources contained in other web pages having the same theme as the current web page.

The specific resources include any one or more of video resources, audio resources, image or picture resources, flash animations, and text resources.

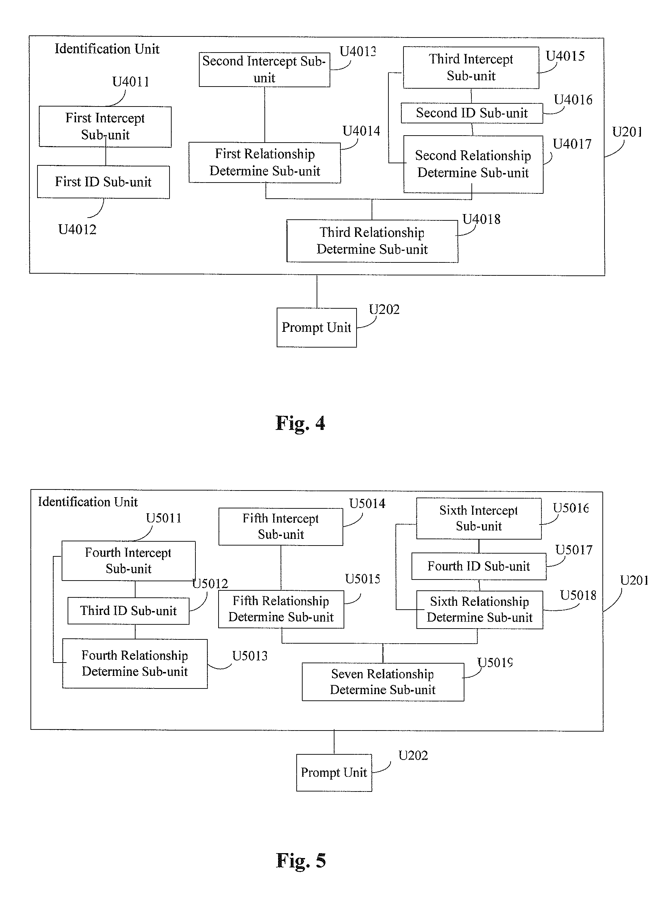

Identification unit U201 can use several methods to identify the specific resource related to the web page; and to determine the corresponding relationship between the specific resource and the web page. For example, by intercepting the request message for downloading the specific resource related to the web page, and based on the URL of the resource in the request message, the specific resource related to the web page can be identified, and the corresponding relationship between the specific resource and the web page can further be determined. At this point, particular methods are slightly different for specific resources published or posted in different ways. Thus, referring to Figure 4, when the specific resource related to the web page does not need to be played by a player embedded in the web page, the identification unit U201 includes:
A first intercept sub-unit U4011, which is used to intercept the request message for downloading the specific resource related to the web page sent to the server from the browser, and the request message includes the URL of the web page and the URL of the specific resource;
A first identification sub-unit U4012, which is used to, based on the URL of the specific resource, identify the specific resource related to the web page, and to determine the corresponding relationship between the specific resource and the web page based on the URL of the web page.

When the specific resource related to the web page needs to be played by the player embedded in the web page, the identification unit U201 includes:
A second intercept sub-unit U4013, which is used to intercept a first request message for downloading the player sent to the server from the browser, and the first request message includes the URL of the web page and the URL of the player;
A first relationship determine sub-unit U4014, which is used to determine the corresponding relationship between the web page and the player based on the URL of the web page in the first request message;
A third intercept sub-unit U4015, which is used to, after the player is downloaded, intercept a second request message for downloading the specific resource sent to the server from the player, and the second request message includes the URL of the specific resource and the URL of the player;
A second identification sub-unit U4016, which is used to identify the specific resource based on the URL of the specific resource in the second request message;
A second relationship determine sub-unit U4017, which is used to determine the corresponding relationship between the player and the specific resource based on the URL of the player in the second request message;
A third relationship determine sub-unit U4018, which is used to determine the corresponding relationship between the specific resource and the web page based on the corresponding relationship between the web page and the player and the corresponding relationship between the player and the specific resource.

In order to more accurately identify the specific resource related to the web page, the identification unit U201 can also identify the specific resource related to the web page based on the data portion of a response message from the server in reply to the request message for downloading the specific resource related to the web page; and determine the corresponding relationship between the specific resource and the web page. At this point, particular methods are slightly different for specific resources published or posted in different ways. Thus, referring to Figure 5, when the specific resource related to the web page does not need to be played by a player embedded in the web page, identify unit U201 includes:
A fourth intercept sub-unit U5011, which is used to intercept a request message for downloading the specific resource related to the web page sent to the server from the browser and the response message returned from the server, the request message includes the URL of the web page and the URL of the specific resource;
A third identification sub-unit U5012, which is used to identify the specific resource related to the web page based on the data portion of the response message;
A fourth relationship determine sub-unit U5013, which is used to determine a request message corresponding to the response message, and to determine the corresponding relationship between the specific resource and the web page based on the URL of the web page in the request message.

When the specific resource related to the web page needs to be played by a player embedded in the web page, identification unit U201 include:
A fifth intercept sub-unit U5014, which is used to intercept a third request message for downloading the player sent to the server from the browser, and the third request message includes the URL of the web page and the URL of the player;
A fifth relationship determine sub-unit U5015, which is used to determine the corresponding relationship between the web page and the player based on the URL of the web page in the third request message;
A sixth intercept sub-unit U5016, which is used to, after the player is downloaded, intercept a fourth request message for downloading the specific resource sent to the server from the player and the response message returned by the server, and the fourth request message includes the URL of the specific resource and the URL of the player;
A fourth identification sub-unit U5017, which is used to identify the specific resource based on the data portion of the response message;
A sixth relationship determine sub-unit U5018, which is used to determine a request message corresponding to the response message, and to determine the corresponding relationship between the specific resource and the player based on the URL of the player in the fourth request message;
A seventh relationship determine sub-unit U5019, which is used to determine the corresponding relationship between the specific resource and the web page based on the corresponding relationship between the web page and the player and the corresponding relationship between the player and the specific resource.

Further, the specific resource that does not need to be played by a player embedded in the web page can include any one or more of image or picture, text, flash animation and web-page background music; and the specific resource that needs to be played by a player embedded in the web page can include video and/or audio resources capable of being played in a player embedded in the web page.

After the specific resource related to the web page is identified and the corresponding relationship between the specific resource and the web page is determined, prompt unit U202 can display prompt indicating the specific resource contained in the web page on an address bar, tab bar, toolbar, and sidebar of a browsing tool (e.g., a browser) or on an area where the specific resource is located.

When displaying the prompt, there are also many scenarios. For example, prompt unit U202 may include:
A first prompt sub-unit, which is used to display the prompt indicating the specific resource contained in the current web page in a window of the current web page containing the specific resource;
   Or,
A second prompt sub-unit, which is used to, when at least two web pages containing identified specific resources, display a unified prompt indicating the specific resources contained in each of the at least two web pages;
   Or,
A third prompt sub-unit, which is used to, when at least two specific resources are identified in the web page, display a unified prompt indicating the at least two specific resources contained in the web page.

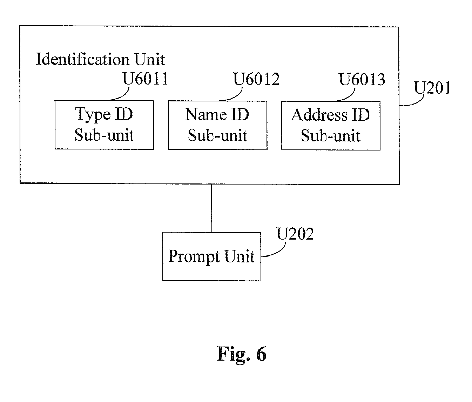

The contents of the prompt or prompt icon can include the type, and/or name, and/or download address, etc., of the specific resource. Referring to Figure 6, identification unit U201 may include:
A type identification sub-unit U6011, which is used to identify a type of the specific resource;
Prompt unit U202 is used to, based on the corresponding relationship between the specific resource and the current web page, display the prompt indicating the specific resource contained in the current web page in the window of the current web page having the specific resource. The content of the prompt can include: an indicator of the type of the specific resource;
   And/or,
A name identification sub-unit U6012, which is used to identify a name of the specific resource;
Prompt unit U202 is used to, based on the corresponding relationship between the specific resource and the current web page, display the prompt indicating the specific resource contained in the current web page in the window of the current web page having the specific resource. The content of the prompt can include: an indicator of the name of the specific resource;
   And/or,
An address identification sub-unit U6013, which is used to identify a download address of the specific resource;
Prompt unit U202 is used to, based on the corresponding relationship between the specific resource and the current web page, display the prompt indicating the specific resource contained in the current web page in the window of the current web page having the specific resource. The content of the prompt can include: an indicator of the download address of the specific resource.

The contents of the prompt or prompt icon can be directly seen from the prompt indicator, or the contents can be seen only when the prompt is being clicked on or a mouse is moving over the prompt, such as the name and the download address. In other words, not all contents of the prompt are displayed on the web page.

It should be noted that the embodiments of the present invention can be realized through the browser, or by other software and/or hardware.

The systems, apparatus, and methods described in the present invention can be applicable to a variety of network or client terminal environment, such as computer equipment including personal computer equipment and the like, or mobile phones, mobile communications equipment, personal digital assistant (PDA) and other electronic equipment.

The above detailed descriptions illustrate a page resource processing method and apparatus provided by the present invention. Individual examples are used to illustrate the principle and implementation of the present invention. However, the examples and embodiments are only used to help understanding the methods and spirit of the present invention. Also, for those with ordinary skill in the art, particular implementations and application scope may be changed based on the principles of the present invention. In summary, the contents of this specification should not be interpreted as any limitation to the present invention.

## Claims

1. A page resource processing method, comprising:
identifying a specific resource related to a web page, and determining a corresponding relationship between the specific resource and the web page;
displaying a prompt indicating the specific resource related to the web page based on the corresponding relationship between the specific resource and the web page.

2. The method according to claim 1, wherein identifying the specific resource related to the web page further includes:
identifying the specific resource contained in the web page;
and/or,
identifying the specific resource contained in a sub-page of the web page;
and/or,
identifying the specific resource backend-transferred in the web page;
and/or,
identifying the specific resource contained in another web page pointed to by a hyperlink in the web page;
and/or,
identifying the specific resource contained in a web page having a same theme as the web page.

3. The method according to claim 1, wherein the specific resource includes any one or more of a video resource, an audio resource, an image resource, a text resource, and an animation resource.

4. The method according to claim 1, wherein identifying the specific resource related to the web page further includes:
intercepting a request message for downloading the specific resource related to the web page, the request message including uniform resource locator information of the specific resource;
identifying the specific resource related to the web page based on the uniform resource locator information of the specific resource in the request message.

5. The method according to claim 4, wherein the specific resource does not need to be played by a player embedded in the web page, and identifying the specific resource related to the web page and determining the corresponding relationship between the specific resource and the web page further include:
intercepting a request message for downloading the specific resource related to the web page sent to a server from a browser, the request message including uniform resource locator information of the web page and the uniform resource locator information of the specific resource;
identifying the specific resource related to the web page based on the uniform resource locator information of the specific resource, and determining the corresponding relationship between the specific resource and the web page based on the uniform resource locator information of the web page.

6. The method according to claim 4, wherein the specific resource needs to be played by a player embedded in the web page, and identifying the specific resource related to the web page and determining the corresponding relationship between the specific resource and the web page further include:
intercepting a first request message for downloading the player sent to a server from a browser, the first request message including uniform resource locator information of the web page and the uniform resource locator information of the player;
determining a corresponding relationship between the web page and the player based on the uniform resource locator information of the web page in the first request message;
after the player is downloaded, intercepting a second request message for downloading the specific resource sent to the server from the player, the second request message including uniform resource locator information of the specific resource and the uniform resource locator information of the player;
identifying the specific resource related to the web page based on the uniform resource locator information of the specific resource in the second request message, and determining the corresponding relationship between the specific resource and the player based on the uniform resource locator information of the player in the second request message;
determining the corresponding relationship between the identified specific resource and the web page based on the corresponding relationship between the web page and the player and the corresponding relationship between the player and the specific resource.

7. The method according to claim 1, wherein identifying the specific resource related to the web page further includes:
identifying the specific resource related to the web page based on a data portion of a response message from a server in reply to a request message for downloading the specific resource related to the web page.

8. The method according to claim 7, wherein the specific resource does not need to be played by a player embedded in the web page, and identifying the specific resource related to the web page and determining the corresponding relationship between the specific resource and the web page further includes:
intercepting a request message for downloading the specific resource related to the web page sent to the server from a browser and the response message returned from the server, the request message including uniform resource locator information of the web page and the uniform resource locator information of the specific resource;
identifying the specific resource related to the web page based on the data portion of the response message;
determining the request message corresponding to the response message, and determining the corresponding relationship between the specific resource and the web page based on the uniform resource locator information of the web page in the request message.

9. The method according to claim 7, wherein the specific resource needs to be played by a player embedded in the web page, and identifying the specific resource related to the web page and determining the corresponding relationship between the specific resource and the web page further includes:
intercepting a third request message for downloading the player sent to the server from a browser, the third request message including uniform resource locator information of the web page and the uniform resource locator information of the player;
determining a corresponding relationship between the web page and the player based on the uniform resource locator information of the web page in the third request message;
after the player is downloaded, intercepting a fourth request message for downloading the specific resource sent to the server from the player and a response message returned from the server, the fourth request message including uniform resource locator information of the specific resource and the uniform resource locator information of the player;
identifying the specific resource related to the web page based on a data portion of the response message;
determining the request message corresponding to the response message, and determining the corresponding relationship between the specific resource and the player based on the uniform resource locator information of the player in the fourth request message
determining the corresponding relationship between the identified specific resource and the web page based on the corresponding relationship between the web page and the player and the corresponding relationship between the player and the specific resource.

10. The method according to claim 5 or 8, wherein the specific resource that does not need to be played by the player embedded in the web page includes any one or more of an image, a text, an animation and a web-page background music.

11. The method according to claim 6 or 9, wherein the specific resource that needs to be played by the player embedded in the web page includes a video resource and/or an audio resource capable of being played in the player embedded in the web page.

12. The method according to any of claims 1-9, wherein displaying the prompt indicating the specific resource in the web page further includes:
displaying the prompt indicating the specific resource contained in the web page on an address bar, and/or, tab bar, and/or, toolbar, and/or sidebar of a browsing tool and/or on an area where the specific resource is located.

13. The method according to any of claims 1-9, wherein displaying the prompt indicating the specific resource in the web page further includes:
displaying the prompt indicating the specific resource contained in the web page in the a window of the web page containing the specific resource;
or,
when at least two web pages containing identified specific resources, displaying a unified prompt indicating the specific resources contained in each of the at least two web pages;
or,
when at least two specific resources are identified in the web page, displaying a unified prompt indicating the at least two specific resources contained in the web page.

14. The method according to any of claims 1-9, wherein:
identifying the specific resource related to the web page further includes: identifying a type of the specific resource;
and contents of the prompt include: the type of the specific resource;
and/or,
identifying the specific resource related to the web page further includes: identifying a name of the specific resource;
and the contents of the prompt include: the name of the specific resource;
and/or,
identifying the specific resource related to the web page further includes: identifying a download address of the specific resource;
and the contents of the prompt include: the download address of the specific resource.

15. A page resource processing apparatus, comprising:
an identification unit used to identify a specific resource related to a web page, and to determine a corresponding relationship between the specific resource and the web page;
a prompt unit, used to display a prompt indicating the specific resource related to the web page based on the corresponding relationship between the specific resource and the web page.

16. The apparatus according to claim 15, wherein the identification unit further includes:
a first identification sub-unit used to identify the specific resource contained in the web page;
and/or,
a second identification sub-unit used to identify the specific resource contained in a sub-page of the web page;
and/or,
a third identification sub-unit used to identify the specific resource backend-transferred in the web page;
and/or,
a fourth identification sub-unit used to identify the specific resource contained in another web page pointed to by a hyperlink in the web page;
and/or,
a fifth identification sub-unit, used to identify the specific resource contained in another web page having a same theme as the web page.

17. The apparatus according to claim 15, wherein the specific resource includes any one or more of a video resource, an audio resource, an image resource, a text resource, and an animation resource.

18. The apparatus according to claim 15, wherein the identification unit is further used to intercept a request message for downloading the specific resource related to the web page, to identify the specific resource related to the web page based on uniform resource locator information of the specific resource in the request message, and to determine the corresponding relationship between the specific resource and the web page.

19. The apparatus according to claim 18, wherein the specific resource does not need to be played by a player embedded in the web page, and the identification unit further includes:
a first intercept sub-unit used to intercept a request message for downloading the specific resource related to the web page sent to a server from a browser, the request message including uniform resource locator information of the web page and the uniform resource locator information of the specific resource;
a first identification sub-unit, used to identify the specific resource related to the web page based on the uniform resource locator information of the specific resource, and to determine the corresponding relationship between the specific resource and the web page based on the uniform resource locator information of the web page.

20. The apparatus according to claim 18, wherein the specific resource needs to be played by a player embedded in the web page, and the identification unit further includes:
a second intercept sub-unit used to intercept a first request message for downloading the player sent to a server from a browser, the first request message including uniform resource locator information of the web page and the uniform resource locator information of the player;
a first relationship determine sub-unit used to determine a corresponding relationship between the web page and the player based on the uniform resource locator information of the web page in the first request message;
a third intercept sub-unit used to, after the player is downloaded, intercept a second request message for downloading the specific resource sent to the server from the player, the second request message including uniform resource locator information of the specific resource and the uniform resource locator information of the player;
a second identification sub-unit used to identify the specific resource related to the web page based on the uniform resource locator information of the specific resource in the second request message;
a second relationship determine sub-unit used to determine the corresponding relationship between the specific resource and the player based on the uniform resource locator information of the player in the second request message;
a third relationship determine sub-unit used to determine the corresponding relationship between the identified specific resource and the web page based on the corresponding relationship between the web page and the player and the corresponding relationship between the player and the specific resource.

21. The apparatus according to claim 15, wherein the identification unit is further used to identify the specific resource related to the web page based on a data portion of a response message from a server in reply to a request message for downloading the specific resource related to the web page, and to determine the corresponding relationship between the specific resource and the web page.

22. The apparatus according to claim 21, wherein the specific resource does not need to be played by a player embedded in the web page, and the identification unit further includes:
a fourth intercept sub-unit used to intercept a request message for downloading the specific resource related to the web page sent to the server from a browser and the response message returned from the server, the request message including uniform resource locator information of the web page and the uniform resource locator information of the specific resource;
a third identification sub-unit used to identify the specific resource related to the web page based on the data portion of the response message;
a fourth relationship determine sub-unit used to determine the request message based on the response message, and to determine the corresponding relationship between the specific resource and the web page based on the uniform resource locator information of the web page in the request message.

23. The apparatus according to claim 21, wherein the specific resource needs to be played by a player embedded in the web page, and the identification unit further includes:
a fifth intercept sub-unit used to intercept a third request message for downloading the player sent to the server from a browser, the third request message including uniform resource locator information of the web page and the uniform resource locator information of the player;
a fifth relationship determine sub-unit used to determine a corresponding relationship between the web page and the player based on the uniform resource locator information of the web page in the third request message;
a sixth intercept sub-unit used to, after the player is downloaded, intercept a fourth request message for downloading the specific resource sent to the server from the player and a response message returned from the server, the fourth request message including uniform resource locator information of the specific resource and the uniform resource locator information of the player;
a fourth identification sub-unit, used to identify the specific resource related to the web page based on a data portion of the response message;
a sixth relationship determine sub-unit used to determine the request message based on the response message, and to determine the corresponding relationship between the specific resource and the web page based on the uniform resource locator information of the web page in the fourth request message;
a seventh relationship determine sub-unit, used to determine a corresponding relationship between the identified specific resource and the web page based on the corresponding relationship between the web page and the player and the corresponding relationship between the player and the specific resource.

24. The apparatus according to claim 19 or 22, wherein the specific resource that does not need to be played by a player embedded in the web page includes any one or more of an image, a text, an animation and a web-page background music.

25. The apparatus according to claim 20 or 23, wherein the specific resource that needs to be played by a player embedded in the web page includes a video resource and/or an audio resource capable of being played in the player embedded in the web page.

26. The apparatus according to any of claims 15-23, wherein the prompt unit is further used to display the prompt indicating the specific resource contained in the web page on an address bar, and/or, tab bar, and/or, toolbar, and/or sidebar of a browsing tool and/or on an area where the specific resource is located.

27. The apparatus according to any of claims 15-23, wherein the prompt unit further includes:
a first prompt sub-unit used to display the prompt indicating the specific resource contained in the web page in the a window of the web page containing the specific resource;
or,
a second prompt sub-unit used to, when at least two web pages containing identified specific resources, display a unified prompt indicating the specific resources contained in each of the at least two web pages;
or,
a third prompt sub-unit used to, when at least two specific resources are identified in the web page, display a unified prompt indicating the at least two specific resources contained in the web page.

28. The apparatus according to any of claims 15-23, wherein the identification unit further includes:
a type identification sub-unit used to identify a type of the specific resource, wherein contents of the prompt include: the type of the specific resource;
and/or,
a name identification sub-unit used to identify a name of the specific resource, wherein the contents of the prompt include: the name of the specific resource;
and/or,
a download-address identification sub-unit used to identify a download address of the specific resource, wherein the contents of the prompt include: the download address of the specific resource.

29. The apparatus according to any of claims 15-23, wherein the apparatus is a browser.

30. A computer-readable medium including computer program instructions, when the computer program instructions being executed by a computer unit, instructing the computer unit to:
identify a specific resource related to a web page, and determine a corresponding relationship between the specific resource and the web page;
display a prompt indicating the specific resource in the web page based on the corresponding relationship between the specific resource and the web page.
